# EUROPÄISCHE PATENTANMELDUNG

(11) **EP 3 994 966 A1**
(43) Veröffentlichungstag der Anmeldung: **11.05.2022**
(21) Anmeldenummer: 20206503.3
(22) Anmeldetag: 09.11.2020
(51) Int. Cl.: A01B 13/04, A01B 63/24, A01B 63/26

(54) **HACKEINSATZ-VERSTELLUNG AM HACKGERÄT**

(71) Anmelder: Einböck Beteiligungs-GmbH, 4751 Dorf an der Pram (AT)
(72) Erfinder: PICHLER, Bernhard, 4720 Kallham (AT)
(74) Vertreter: Feller, Frank

(57) **Zusammenfassung**

Es wird eine Vorrichtung zum Bearbeiten eines landwirtschaftlichen Bodens durch Bewegen der Vorrichtung entlang des Bodens in einer Fahrtrichtung eines Zugfahrzeuges zum Ziehen der Vorrichtung beschrieben. Die Vorrichtung weist einen Vorrichtungskörper mit einer Längsebene, die im Wesentlichen parallel zur Fahrtrichtung verläuft, mehrere Arbeitswerkzeuge und mehrere, längliche Trägerelemente auf, welche die Arbeitswerkzeuge tragen und an dem Vorrichtungskörper gelagert sind. Die Trägerelemente sind jeweils quer zu der Längsebene bewegbar, so dass das jeweilige Arbeitswerkzeug in verschiedenen Abständen von der Längsebene angeordnet werden kann. Diese Vorrichtung soll derart weitergebildet werden, dass der manuelle Arbeitsaufwand sowie der maschinelle Aufwand, der zum Verstellen der Arbeitswerkzeuge quer zu der Zugrichtung des Zugfahrzeuges bzw. quer zu den Nutzpflanzenreihen erforderlich ist, möglichst gering ausfällt. Zur Lösung dieser Aufgabe wird vorgeschlagen, die Vorrichtung mit einer Arretiereinrichtung zum Arretieren der Trägerelemente an dem Vorrichtungskörper zu versehen, wobei die Arretiervorrichtung ein Betätigungsorgan umfasst, durch dessen Betätigung die Arretierung der mehreren Trägerelemente an dem Vorrichtungskörper gemeinsam lösbar ist oder die mehreren Trägerelemente gemeinsam an dem Vorrichtungskörper festlegbar sind.

## Beschreibung

### I. Anwendungsgebiet

Die vorliegende Erfindung betrifft eine Vorrichtung zum Bearbeiten eines landwirtschaftlichen Bodens. Dabei werden Arbeitswerkzeuge zum Bearbeiten des Bodens zwischen benachbarten Reihen landwirtschaftlicher Nutzpflanzen mit Hilfe eines Zugfahrzeuges bewegt. Bei den Arbeitswerkzeugen kann es sich beispielsweise um Hackwerzeuge, Rechen, Zinken, Fingersterne oder Ähnliches handeln.

### II. Technischer Hintergrund

Der Abstand zwischen Reihen landwirtschaftlicher Nutzpflanzen wird insbesondere abhängig von der Art der Nutzpflanze unterschiedlich groß gewählt. Der Boden zwischen benachbarten Nutzpflanzenreihen wird regelmäßig mit Hilfe landwirtschaftlicher Arbeitsgeräteinheiten bearbeitet, die jeweils mehrere Arbeitswerkzeuge aufweisen. Die Arbeitsgeräteinheiten mit den jeweils mehreren Arbeitswerkzeugen werden hierzu mit Hilfe eines Zugfahrzeuges zwischen benachbarten Nutzpflanzenreihen entlang gezogen. Um eine gleichmäßige Bearbeitung des Bodens zwischen zwei benachbarten Nutzpflanzenreihen zu gewährleisten, muss die Anordnung der Arbeitswerkzeuge an der jeweiligen Arbeitsgeräteinheit quer zu der Zugrichtung des Zugfahrzeuges bzw. quer zu den Nutzpflanzenreihen eingestellt werden können.

Es sind bereits landwirtschaftliche Arbeitsgeräteinheiten bekannt, bei denen eine Einstellung der Arbeitswerkzeuge in der vorgenannten Art möglich ist. Bei diesen Arbeitsgeräteinheiten kann jedes einzelne Arbeitswerkzeug separat und unabhängig von einem anderen Arbeitswerkzeug derselben Arbeitsgeräteinheit quer zu der Zugrichtung verstellt werden. Diese Verstellung erfolgt entweder von Hand durch Lösen und Wiederanziehen von Arretierschrauben oder Ähnlichem oder mit Hilfe von beispielsweise elektrischen Stellantrieben, die jeweils eines der Arbeitswerkzeuge der Arbeitsgeräteinheit verstellen.

Bei den bekannten Arbeitsgeräteinheiten ist es zum Einstellen der Arbeitsgeräteinheit auf einen bestimmten Abstand zweier benachbarter Nutzpflanzenreihen erforderlich, jedes einzelne Arbeitswerkzeug einer jeden Arbeitsgeräteinheit individuell einzustellen. In Abhängigkeit von der Anzahl der Arbeitswerkzeuge pro Arbeitsgeräteinheit müssen mehr oder weniger Arretierschrauben gelöst und wieder angezogen werden. Bei der Verstellung der Arbeitswerkzeuge mittels Stellantrieben ist der maschinelle Aufwand erheblich, da für jedes Arbeitswerkzeug einer jeden Arbeitsgeräteinheit ein eigener Stellantrieb vorgesehen werden muss. Der manuelle oder maschinelle Aufwand zum Einstellen der bekannten Arbeitsgeräteinheiten auf einen anderen Abstand benachbarter Nutzpflanzenreihen ist daher vergleichsweise hoch.

### III. Darstellung der Erfindung

### a) Technische Aufgabe

Es ist daher Aufgabe der vorliegenden Erfindung, eine Vorrichtung zum Bearbeiten eines landwirtschaftlichen Bodens mit mehreren Arbeitswerkzeugen zum Bearbeiten des Bodens zu schaffen, bei welcher der manuelle Arbeitsaufwand sowie der maschinelle Aufwand, der zum Verstellen der Arbeitswerkzeuge quer zu der Zugrichtung des Zugfahrzeuges bzw. quer zu den Nutzpflanzenreihen erforderlich ist, möglichst gering ausfällt.

### b) Lösung der Aufgabe

Zur Lösung dieser Aufgabe wird eine Vorrichtung zum Bearbeiten eines landwirtschaftlichen Bodens mit den Merkmalen des Anspruchs 1 vorgeschlagen. Weitere Ausgestaltungen der Erfindung ergeben sich aus den Unteransprüchen.

Erfindungsgemäß wird eine Vorrichtung zum Bearbeiten eines landwirtschaftlichen Bodens durch Bewegen der Vorrichtung entlang des Bodens in einer Fahrtrichtung eines Zugfahrzeuges zum Ziehen der Vorrichtung vorgeschlagen. Die Vorrichtung weist einen Vorrichtungskörper mit einer Längsebene auf, die im Wesentlichen vertikal bzw. senkrecht zu dem zu bearbeitenden Boden sowie im Wesentlichen parallel zu der Fahrtrichtung und den Nutzpflanzenreihen verläuft. Die Vorrichtung weist des Weiteren mehrere Arbeitswerkzeuge und mehrere, längliche Trägerelemente auf, welche die Arbeitswerkzeuge tragen und verstellbar an dem Vorrichtungskörper gelagert sind. Die Trägerelemente sind jeweils quer zu der Längsebene bewegbar, so dass das jeweilige Arbeitswerkzeug in verschiedenen Abständen von der Längsebene der Vorrichtung angeordnet werden kann.

Die erfindungsgemäße Vorrichtung ist mit einer Arretiereinrichtung zum Arretieren der Trägerelemente an dem Vorrichtungskörper versehen. Mit Hilfe der Arretiereinrichtung können die Trägerelemente unbewegbar an dem Vorrichtungskörper arretiert bzw. festgelegt werden. Die Arretiereinrichtung umfasst ein Betätigungsorgan, durch dessen Betätigung entweder eine bereits wirksame Arretierung der mehreren Trägerelemente an dem Vorrichtungskörper gemeinsam lösbar ist oder durch dessen Betätigung die mehreren, noch nicht arretierten Trägerelemente gemeinsam an dem Vorrichtungskörper festlegbar sind.

Ein Vorteil der erfindungsgemäßen Vorrichtung besteht darin, dass die verstellbaren Arbeitswerkzeuge der Vorrichtung auf schnelle und einfache Weise durch Betätigen eines Betätigungsorgans gemeinsam aus ihrer Arretierung gelöst oder durch Betätigen eines Betätigungsorgans gemeinsam an dem Vorrichtungskörper arretiert werden können. Separate Handgriffe zum Lösen oder Arretieren einzelner Arbeitswerkzeuge der Vorrichtung erübrigen sich dadurch.

Im Rahmen der vorliegenden Erfindung ist es denkbar, ein Betätigungsorgan zum gemeinsamen Lösen der Arretierung der mehreren Trägerelemente und ein weiteres Betätigungsorgan zum gemeinsamen Festlegen der mehreren Trägerelemente vorzusehen. Beispielsweise könnte das weitere Betätigungsorgan zum gemeinsamen Festlegen der Trägerelemente entgegen der Wirkung einer oder mehrerer Federelemente in seine Arretierstellung gebracht werden. In dieser Arretierstellung könnte das weitere Betätigungsorgan beispielsweise mit Hilfe eines Riegelelements formschlüssig gehalten werden. Das Betätigungsorgan zum gemeinsamen Lösen der Arretierung könnte dann bei seiner Betätigung derart auf das Riegelelement wirken, dass der Riegel das formschlüssig gehaltene, weitere Betätigungsorgan freigibt und dieses von dem Federelement oder den Federelementen in seine Freigabestellung zurück gedrückt wird.

Besonders vorteilhaft ist es, ein einziges Betätigungsorgan vorzusehen, mittels welchem sowohl die Arretierung der mehreren Trägerelemente an dem Vorrichtungskörper gemeinsam lösbar ist als auch die mehreren Trägerelemente gemeinsam an dem Vorrichtungskörper festlegbar sind.

Die Arretierung der mehreren Trägerelemente an dem Vorrichtungskörper kann formschlüssig oder reib- bzw. kraftschlüssig erfolgen. Wenn eine stufenlose Verstellung der Arbeitswerkzeuge relativ zu der Längsebene des Vorrichtungskörpers gewünscht ist, kommt bevorzugt die reibschlüssige Arretierung der Trägerelemente zur Anwendung. Da beim Bearbeiten des landwirtschaftlichen Bodens die quer zu der Fahrtrichtung des Zugfahrzeuges bzw. quer zu der Längsebene des Vorrichtungskörpers wirkenden Kräfte deutlich geringer als die in Fahrtrichtung bzw. in Richtung der Längsebene wirkenden Kräfte sind, ist eine reibschlüssige Arretierung der Trägerelemente an dem Vorrichtungskörper im Rahmen der vorliegenden Erfindung vollkommen ausreichend.

Denkbar ist im Rahmen der vorliegenden Erfindung auch, neben den mehreren Arbeitswerkzeugen, deren Abstand von der Längsebene des Vorrichtungskörpers verstellbar ist, zusätzlich ein oder mehrere Arbeitswerkzeuge vorzusehen, das bzw. die relativ zu dem Vorrichtungskörper nicht bewegt bzw. verstellt werden können. Beispielsweise könnte ein solches zusätzliches Arbeitswerkzeug, das nicht verstellt werden kann, an dem in Fahrtrichtung des Zugfahrzeuges hinteren Ende des Vorrichtungskörpers in dessen Längsebene angeordnet werden.

Bei den landwirtschaftlichen Arbeitswerkzeugen kann es sich beispielsweise um Hackwerkzeuge handeln. Denkbar sind auch Arbeitswerkzeuge in Form von Rechen, Zinken, Fingersternen oder Ähnlichem.

Vorzugsweise weist der Vorrichtungskörper mehrere Führungsaufnahmen mit jeweils zugehörigen Führungsflächen auf. In den Führungsaufnahmen ist jeweils wenigstens eines der Trägerelemente zum Tragen eines jeweiligen Arbeitswerkzeuges entlang der jeweiligen Führungsfläche verschiebbar geführt. Die Arretiereinrichtung wirkt in diesem Fall reib- bzw. kraftschlüssig und weist hierzu mehrere Klemmhebel auf. Jeder der mehreren Führungsaufnahmen zum Aufnehmen der Trägerelemente ist wenigstens einer der mehreren Klemmhebel funktional zugeordnet.

Der jeweilige Klemmhebel ist durch Betätigen des gemeinsam auf alle Klemmhebel wirkenden Betätigungsorgans von einer Klemmstellung, in welcher er das jeweilige Trägerelement oder die jeweiligen Trägerelemente gegen die jeweilige Führungsfläche der jeweiligen Führungsaufnahme drückt und es oder sie dadurch reibschlüssig in der jeweiligen Führungsaufnahme unverschiebbar festlegt, in eine Freigabestellung, in welcher er das jeweilige Trägerelement oder die jeweiligen Trägerelemente freigibt, so dass es oder sie in der jeweiligen Führungsaufnahme entlang der jeweiligen Führungsfläche verschiebbar ist oder sind, und/oder umgekehrt bewegbar.

In vorteilhafter Weise werden die Führungsaufnahmen jeweils von einer rohrartigen Führungshülse gebildet, die wenigstens ein Durchgangsloch aufweist, durch welches der jeweilige Klemmhebel oder die jeweiligen Klemmhebel zum Festlegen des jeweiligen Trägerelements hindurchgreifen kann oder können. Dabei ist es ausreichend, dass der oder die Klemmhebel nur mit seinem oder ihrem zum Klemmen erforderlichen Längenbereich durch das Durchgangsloch hindurch an das Trägerelement angreifen kann oder können.

Vorzugsweise sind die mehreren Klemmhebel um eine jeweilige Drehachse drehbar an dem Vorrichtungskörper gelagert.

Die Arretiereinrichtung umfasst in vorteilhafter Weise wenigstens eine Verbindungsstange, wobei jeder der mehreren Klemmhebel über ein jeweiliges Gelenk derart mit der Verbindungsstange gelenkig verbunden ist, dass ein Längenabschnitt des jeweiligen Klemmhebels, der zwischen der jeweiligen Drehachse und dem jeweiligen Gelenk liegt, in der Klemmstellung unmittelbar oder mittelbar an das jeweilige Trägerelement angreifen kann und somit zum Festlegen des jeweiligen Trägerelements dient.

Ein mittelbares Angreifen eines Klemmhebels an ein Trägerelement kommt beispielsweise dann in Betracht, wenn in einer Führungsaufnahme zwei Trägerelemente gelagert sind und der Klemmhebel unmittelbar nur gegen eines der Trägerelemente drückt. Gegen das andere der beiden in derselben Führungsaufnahme benachbart geführten Trägerelemente drückt der Klemmhebel in diesem Fall nur mittelbar. Die von dem Klemmhebel auf das direkt von ihm berührte Trägerelement aufgebrachte Klemmkraft wird dem anderen Trägerelemnet über das direkt berührte Trägerelement vermittelt.

Vorzugsweise umfasst die Arretiereinrichtung des Weiteren mehrere Dämpfungseinrichtungen, die jeweils zwischen der Verbindungsstange und dem jeweiligen Klemmhebel wirkend angeordnet sind. Die Dämpfungseinrichtungen ermöglichen in vorteilhafter Weise den Ausgleich von Toleranzen sowie sonstigen Maßungenauigkeiten betreffend die einzelnen Bestandteile der Arretiereinrichtung.

Die jeweilige Dämpfungseinrichtung weist vorzugsweise eine Abstützstange sowie eine Druckfeder auf. Dabei ist die jeweilige Abstützstange an dem jeweiligen Gelenk gelenkig mit der Verbindungsstange verbunden. Des Weiteren durchsetzt die jeweilige Abstützstange den jeweiligen Klemmhebel derart, dass sie sich relativ zu dem jeweiligen Klemmhebel bewegen kann. Die jeweilige Druckfeder stützt sich einerseits an der Abstützstange sowie andererseits an dem jeweiligen Klemmhebel ab.

Bei dem Betätigungsorgan handelt es sich vorzugsweise um ein Nockenelement mit einer Nockensteuerfläche, das um eine Nockenachse drehbar an dem Vorrichtungskörper gelagert ist. Die Betätigung des Nockenelements kann beispielsweise mit Hilfe eines herkömmlichen Schraubenschlüssels oder Ähnlichem erfolgen.

In vorteilhafter Weise kann die Arretiereinrichtung einen Stellhebel umfassen, der um eine Stellhebelachse drehbar an dem Vorrichtungskörper gelagert ist. In einem auf einer Seite der Stellhebelachse gelegenen Bereich des Stellhebels weist dieser eine Angriffsfläche auf, an welcher die Nockensteuerfläche angreifen kann, um eine Drehung des Stellhebels um seine Stellhebelachse zu bewirken.

In vorteilhafter Weise umfasst die Arretiereinrichtung der erfindungsgemäßen Vorrichtung wenigstens ein Ausgleichsglied, welches einerseits über ein erstes Ausgleichsgelenk gelenkig mit der Verbindungsstange und andererseits über ein zweites Ausgleichsgelenk auf einer der Angriffsfläche abgewandten Seite der Stellhebelachse gelenkig mit dem Stellhebel verbunden ist. Das Ausgleichsglied dient dem Ausgleich von Bewegungskomponenten der Verbindungsstange in vertikaler Richtung, die sich aus den Drehbewegungen der Klemmhebel um ihre jeweilige Drehachse an dem Vorrichtungskörper ergeben.

Vorzugsweise fällt das erste Ausgleichsgelenk mit demjenigen Gelenk zusammen, welches die Verbindungsstange mit demjenigen Klemmhebel gelenkig verbindet, der am nächsten an dem Stellhebel liegend angeordnet ist. Dies ist vorteilhaft, da auf diese Weise ein separates Ausgleichsgelenk zum Anlenken des Ausgleichsgliedes an die Verbindungsstange gespart werden und der Bauraum der Arretiereinrichtung somit klein gehalten werden kann.

### c) Ausführungsbeispiel

Nachfolgend wird eine Ausführungsform der erfindungsgemäßen Vorrichtung beispielhaft anhand der Zeichnungen beschrieben. Es zeigen:
- Fig. 1:: eine Ansicht auf drei erfindungsgemäße Vorrichtungen gemäß einem Ausführungsbeispiel von oben mit zwischen ihnen befindlichen Nutzpflanzenreihen;
- Fig. 2:: eine perspektivische Ansicht des Ausführungsbeispiels der erfindungsgemäßen Vorrichtung mit vier Arbeitswerkzeugen;
- Fig. 3:: eine perspektivische Ansicht des in Fig. 2 gezeigten Ausführungsbeispiels, wobei die vier Arbeitswerkzeuge und eine von zwei Körperplatten des Vorrichtungskörpers weggelassen wurden;
- Fig. 4:: eine Seitenansicht des in Fig. 3 gezeigten Ausführungsbeispiels, wobei sich die Arretiereinrichtung in gelöstem Zustand befindet;
- Fig. 5:: das in Fig. 4 gezeigte Detail C in vergrößerter Darstellung;
- Fig. 6:: eine Seitenansicht des in Fig. 3 gezeigten Ausführungsbeispiels, wobei sich die Arretiereinrichtung in arretiertem Zustand befindet;
- Fig. 7:: das in Fig. 6 gezeigte Detail D in vergrößerter Darstellung;
- Fig. 8:: eine perspektivische Ansicht des in Fig. 2 gezeigten Ausführungsbeispiels von schräg unten, wobei die Arbeitswerkzeuge weggelassen wurden;
- Fig. 9:: das in Fig. 8 gezeigte Detail B in vergrößerter Darstellung; und
- Fig. 10:: das in Fig. 8 gezeigte Detail A in vergrößerter Darstellung.

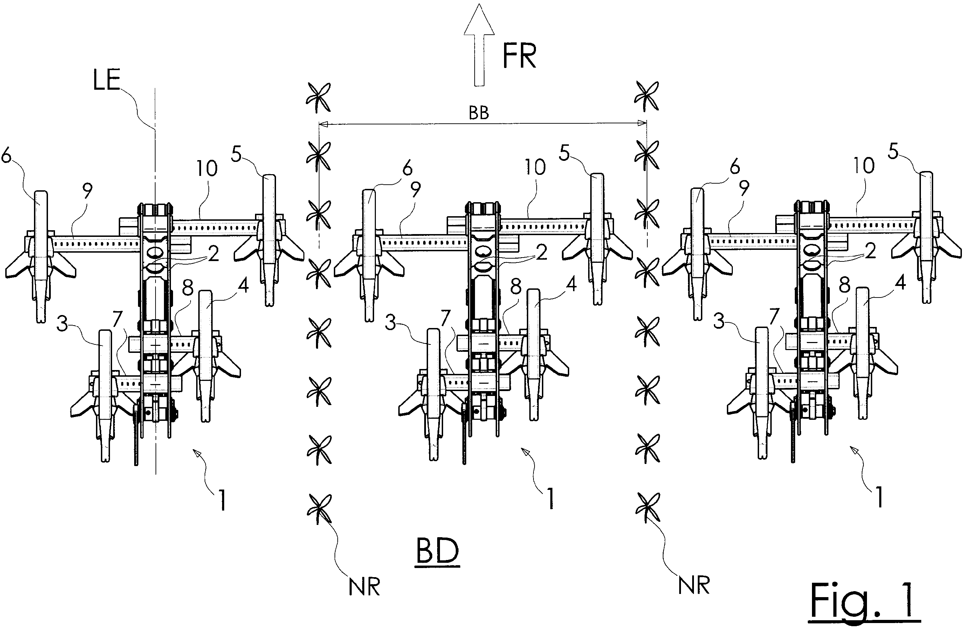

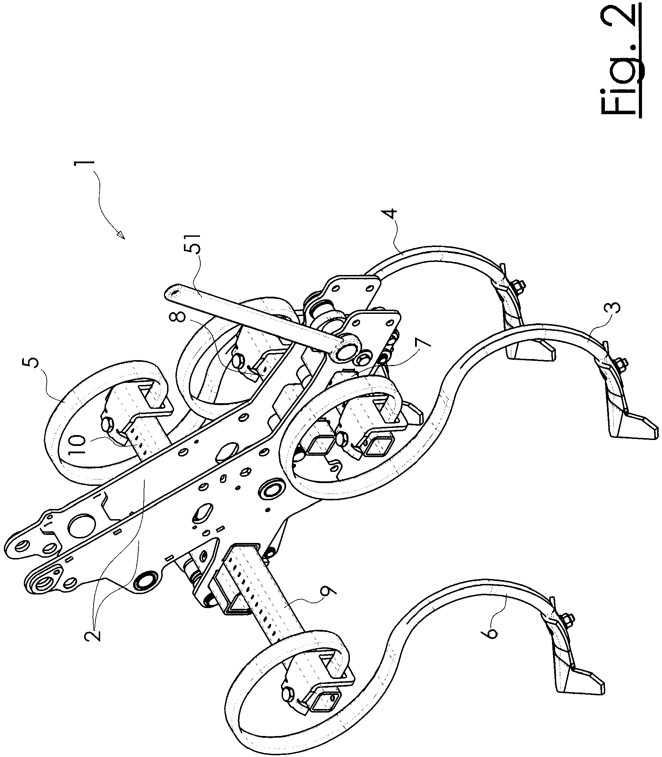

In Fig. 1 entsprechen gleiche Bezugszeichen einander funktional entsprechenden Teilen der drei gezeigten, erfindungsgemäßen Vorrichtungen 1. In den Fig. 2 bis 10 entsprechen gleiche Bezugszeichen gleichen Teilen des dargestellten Ausführungsbeispiels der erfindungsgemäßen Vorrichtung 1.

In Fig. 1 sind drei erfindungsgemäße und in gleicher Weise ausgebildete Vorrichtungen 1 zum Bearbeiten eines landwirtschaftlichen Bodens in der Ansicht von oben zu erkennen. Zwischen der in Fig. 1 mittleren Vorrichtung 1 und der in Fig. 1 linken Vorrichtung 1 sowie zwischen der in Fig. 1 mittleren Vorrichtung 1 und der in Fig. 1 rechten Vorrichtung 1 ist jeweils eine Nutzpflanzenreihe NR dargestellt. Die drei Vorrichtungen 1 werden gemeinsam mit Hilfe eines nicht gezeigten Zugfahrzeuges in einer Fahrtrichtung FR über den landwirtschaftlichen Boden gezogen. In der Praxis zieht ein Zugfahrzeug noch mehr als die drei gezeigten Vorrichtungen 1 über den Boden BD.

Wie in Fig. 1 zu sehen ist, weist bei dem gezeigten Ausführungsbeispiel jede der drei Vorrichtungen 1 insgesamt vier Arbeitswerkzeuge 3, 4, 5 und 6 in Form von Hackwerkzeugen auf. Mit Hilfe der Arbeitswerkzeuge 3, 4, 5 und 6 soll der landwirtschaftliche Boden BD zwischen benachbarten Nutzpflanzenreihen NR gleichmäßig gehackt werden. Zu diesem Zweck sind die Arbeitswerkzeuge 3, 4, 5 und 6 gleichmäßig über die von dem Abstand der Nutzpflanzenreihen NR definierte Bearbeitungsbreite BB verteilt angeordnet.

Unter anderem in Abhängigkeit von der Art der konkreten Nutzpflanze variieren die vorhandenen Bearbeitungsbreiten BB ihrer Größe nach. In Fig. 1 sind die Arbeitswerkzeuge 3, 4, 5 und 6 zur Bearbeitung einer gezeigten, ersten Bearbeitungsbreite BB angeordnet. Soll mit der gleichen Vorrichtung 1 eine zweite Bearbeitungsbreite BB, die kleiner ist als die erste Bearbeitungsbreite BB, bearbeitet werden, so ist es erforderlich, die Abstände der Arbeitswerkzeuge 3, 4, 5 und 6 von einer in Fig. 1 beispielhaft ganz links mit strichpunktierter Linie eingezeichneten Längsebene LE eines Vorrichtungskörper 2 der Vorrichtung 1 zu ändern bzw. zu verstellen. Um eine derartige Verstellung in einer in Fig. 1 horizontal verlaufenden Richtung vornehmen zu können, sind die Arbeitswerkzeuge 3, 4, 5 und 6 an länglichen Trägerelementen 7, 8, 9 und 10 befestigt, die ihrerseits in einer in Fig. 1 horizontalen Richtung nach links oder rechts verschiebbar an dem Vorrichtungskörper 2 gelagert sind.

Zur Einstellung der Arbeitswerkzeuge 3, 4, 5 und 6 auf eine geänderte Bearbeitungsbreite BB wird zunächst die Arretierung der Trägerelemente 7, 8, 9 und 10 an dem Vorrichtungskörper 2 gemeinsam gelöst. Anschließend werden die Trägerelemente 7, 8, 9 und 10 in Fig. 1 in horizontaler Richtung nach rechts oder links so lange verschoben bzw. eingestellt, bis eine gleichmäßige Anordnung der Arbeitswerkzeuge 3, 4, 5 und 6 über die geänderte Bearbeitungsbreite BB hinweg erreicht ist. Anschließend werden die Trägerelemente 7, 8, 9 und 10 alle gemeinsam wieder arretiert, so dass die Vorrichtung 1 danach zur Bearbeitung des Bodens BD mit geänderter Bearbeitungsbreite BB bereit ist.

Fig. 2 zeigt das Ausführungsbeispiel der erfindungsgemäßen Vorrichtung 1 in perspektivischer Ansicht. Der Vorrichtungskörper 2 umfasst hier zwei parallel zueinander angeordnete und voneinander beabstandete Körperplatten. An diesen beiden Körperplatten sind die Trägerelemente 7, 8, 9 und 10 verschiebbar gelagert.

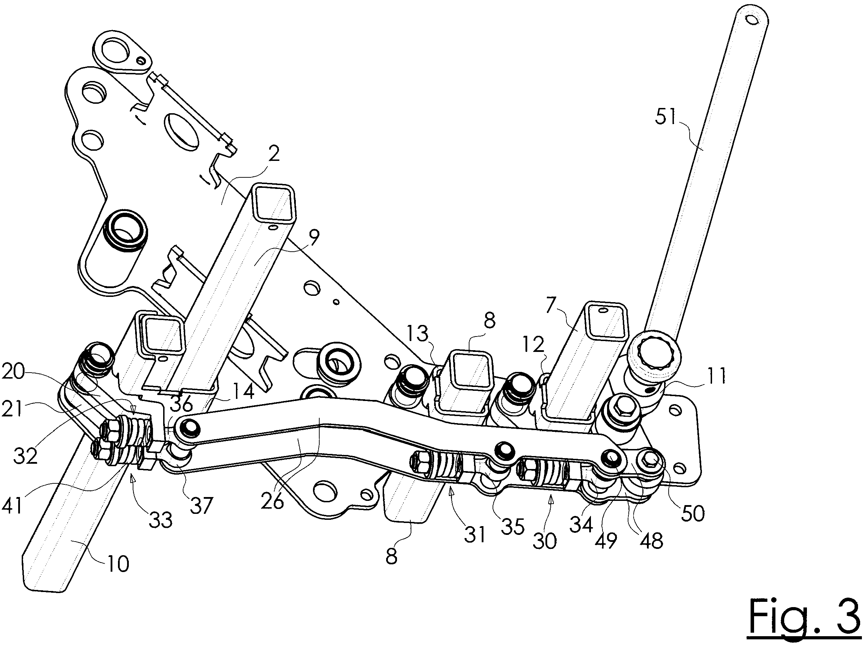

In Fig. 3 ist eine seitliche Ansicht der in Fig. 2 gezeigten Vorrichtung 1 von schräg unten dargestellt, wobei die Arbeitswerkzeuge 3, 4, 5 und 6 sowie eine der beiden Körperplatten des Vorrichtungskörpers 2 weggelassen wurden, um die Konstruktion zwischen den beiden Körperplatten besser sichtbar zu machen. Wie zu erkennen ist, sind an dem Vorrichtungskörper 2 drei Führungsaufnahmen 12, 13 und 14 in Form relativ kurzer, rohrartiger Vierkanthülsen vorgesehen. In die Führungsaufnahme 12 ist das Trägerelement 7 eingeschoben. In die Führungsaufnahme 13 ist das Trägerelement 8 eingeschoben. In die Führungsaufnahme 14 sind die beiden Trägerelemente 9 und 10 eingeschoben.
Wie des Weiteren zu erkennen ist, weisen auch die Trägerelemente 7, 8, 9 und 10 einen Vierkantquerschnitt auf, so dass eine Drehbewegung der Trägerelemente 7, 8, 9 und 10 innerhalb der Führungsaufnahmen 12, 13 und 14 um ihre jeweilige Längsachse formschlüssig verhindert wird. Selbstverständlich können auch andere Querschnittsgeometrien oder andere konstruktive Mittel zur Anwendung kommen, um die Trägerelemente 7, 8, 9 und 10 drehfest in den Führungsaufnahmen 12, 13 und 14 festzulegen.

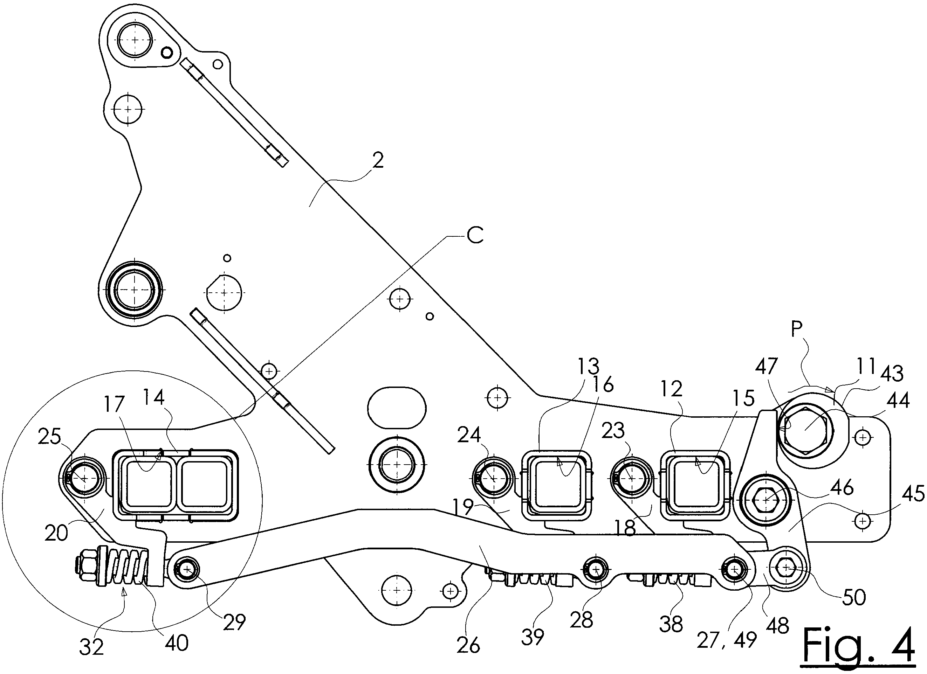

Fig. 4 zeigt eine Seitenansicht des in Fig. 3 perspektivisch gezeigten Ausführungsbeispiels in einer Blickrichtung, die in Richtung der Längsachsen der Trägerelemente 7, 8, 9 und 10 verläuft. Die Arretiereinrichtung zum Lösen und Arretieren der Trägerelemente 7, 8, 9 und 10 in den Führungsaufnahmen 12, 13 und 14 umfasst bei dem gezeigten Ausführungsbeispiel insgesamt vier Klemmhebel 18, 19, 20 und 21, die jeweils um eine Drehachse 23, 24 und 25 schwenkbar an dem Vorrichtungskörper 2 gelagert sind. Dabei ist der Klemmhebel 18 funktional dem Trägerelement 7 und der Klemmhebel 19 funktional dem Trägerelement 8 zugeordnet. Die beiden in Fig. 3 zu sehenden Klemmhebel 20 und 21 sind funktional gemeinsam den Trägerelementen 9 und 10 zugeordnet.

Wie in den Fig. 3 und 4 zu sehen ist, umfasst die Arretiereinrichtung des Weiteren eine Verbindungsstange 26 zum Verbinden der Klemmhebel 18, 19, 20 und 21 miteinander. Wie in Fig. 3 zu erkennen ist, wird die Verbindungsstange 26 von zwei parallel zueinander verlaufenden sowie voneinander beabstandeten Flachmaterialstücken gebildet. Der Klemmhebel 18 ist über ein Gelenk 27, und der Klemmhebel 19 ist über ein Gelenk 28 mit der Verbindungsstange 26 verbunden. Des Weiteren sind die beiden Klemmhebel 20 und 21 über ein gemeinsames Gelenk 29 mit der Verbindungsstange 26 verbunden.

In den Fig. 3 und 4 ist rechts ein Stellhebel 45 zu erkennen, der in seinem mittleren Bereich um eine Stellhebelachse 46 drehbar an dem Vorrichtungskörper 2 gelagert ist. Die Stellhebelachse 46 unterteilt den Stellhebel 45 in einen in Fig. 4 oberen Arm und einen in Fig. 4 unteren Arm. Der in Fig. 4 obere Arm weist eine Angriffsfläche 47 auf, die bei dem gezeigten Ausführungsbeispiel dafür vorgesehen ist, von einer Nockensteuerfläche 43 eines Betätigungsorgans 11 in Form eines Nockenelements angegriffen zu werden. Das Betätigungsorgan 11 in Form des Nockenelements ist um die in Fig. 4 gekennzeichnete Nockenachse 44 drehbar.

An dem in Fig. 4 unteren Arm des Stellhebels 45 ist über ein Ausgleichsgelenk 50 ein Ausgleichsglied 48 angelenkt. Das in Fig. 4 linke Ende des Ausgleichsgliedes 48 ist über ein Ausgleichsgelenk 49 mit der Verbindungsstange 26 verbunden. Dabei fällt in besonders vorteilhafter Weise das Gelenk 27 zur gelenkigen Verbindung des Klemmhebels 18 mit der Verbindungsstange 26 mit dem Ausgleichsgelenk 49 zusammen. Wie in Fig. 3 zu sehen ist, besteht auch das Ausgleichsglied 48 aus zwei parallel zueinander verlaufenden sowie voneinander beabstandeten Flachmaterialstücken.

In den Fig. 3 und 4 sind des Weiteren Dämpfungseinrichtungen 30, 31, 32 und 33 zu erkennen, mittels welchen die Klemmhebel 18, 19, 20 und 21 jeweils mit der Verbindungsstange 26 verbunden sind. Die Dämpfungseinrichtung 30 verbindet den Klemmhebel 18 mit der Verbindungsstange 26. Die Dämpfungseinrichtung 31 verbindet den Klemmhebel 19 mit der Verbindungsstange 26. Die Dämpfungseinrichtung 32 verbindet den Klemmhebel 20 mit der Verbindungsstange 26. Die Dämpfungseinrichtung 33 verbindet den Klemmhebel 21 mit der Verbindungsstange 26.

Die Dämpfungseinrichtungen 30, 31, 32 und 33 weisen jeweils - wie in Fig. 3 zu sehen ist - eine Abstützstange 34, 35, 36 und 37 auf. Die Abstützstange 34 ist über das Gelenk 27 mit der Verbindungsstange 26 verbunden. Die Abstützstange 35 ist über das Gelenk 28 mit der Verbindungsstange 26 verbunden. Die Abstützstangen 36 und 37 sind über das gemeinsame Gelenk 29 mit der Verbindungsstange 26 verbunden.

Wie in den Fig. 3 und 4 des Weiteren zu erkennen ist, weisen die Dämpfungseinrichtungen 30, 31, 32 und 33 jeweils eine Druckfeder 38, 39, 40 und 41 auf, die sich an der jeweiligen Abstützstange 34, 35, 36 und 37 abstützt. Hierzu weisen die Abstützstangen 34, 35, 36 und 37 an ihren von den Gelenken 27, 28 und 29 jeweils abgewandeten Enden ein Gewinde auf, mit dessen Hilfe jeweils ein scheibenförmiger Federsitz von einer Mutter an der jeweiligen Abstützstange 34, 35, 36 und 37 gehalten wird.

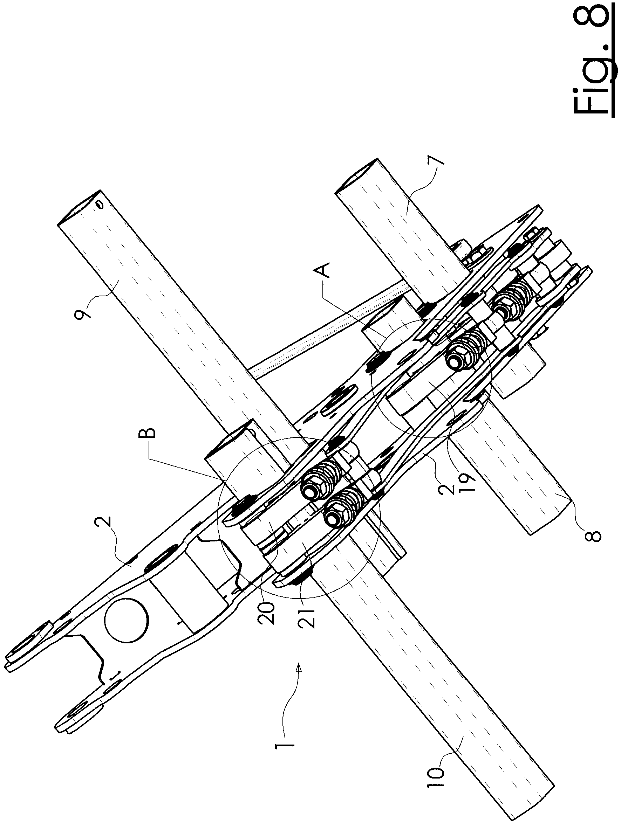

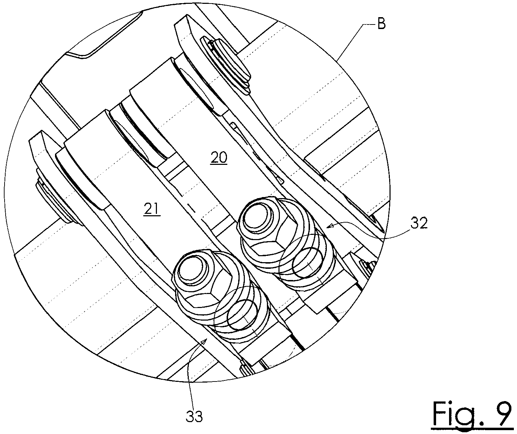

In Fig. 8 ist eine perspektivische Ansicht des Ausführungsbeispiels der erfindungsgemäßen Vorrichtung 1 von schräg unten gezeigt, wobei die Arbeitswerkzeuge 3, 4, 5 und 6 weggelassen wurden. In dem Detail B sind die Klemmhebel 20 und 21 zu erkennen, die auf die Trägerelemente 9 und 10 wirken. In dem Detail A ist der Klemmhebel 19 zu erkennen, der auf das Trägerelement 8 wirkt. Fig. 9 zeigt das Detail B aus Fig. 8 in vergrößerter Darstellung. Neben den Klemmhebeln 20 und 21 sind die diesen zugeordneten Dämpfungseinrichtungen 32 und 33 zu erkennen.

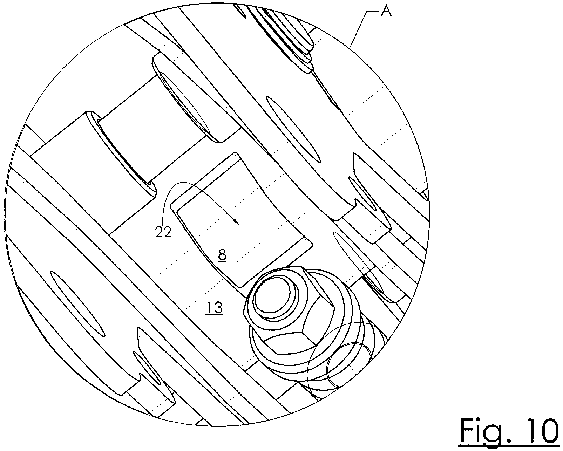

Fig. 10 zeigt das Detail A aus Fig. 8 in vergrößerter Darstellung, wobei der Klemmhebel 19 weggelassen wurde, um ein Durchgangsloch 22 in der Führungsaufnahme 13 zeigen zu können. Durch das hier im Wesentlichen rechteckförmige Durchgangsloch 22 hindurch ist in Fig. 10 das Trägerelement 8 zu erkennen, welches in der Führungsaufnahme 13 verschiebbar geführt ist. Der Klemmhebel 19 kann durch das Durchgangsloch 22 hindurch an dem Trägerelement 8 angreifen und es reib- bzw. kraftschlüssig in der Führungsaufnahme 13 festklemmen. Ein dem Durchgangsloch 22 entsprechendes Durchgangsloch ist auch in der Führungsaufnahme 12 vorgesehen. Es kann von dem Klemmhebel 18 durchgriffen werden. Ein gemeinsames Durchgangsloch oder zwei separate Durchgangslöcher entsprechend dem Durchgangsloch 22 sind auch in der Führungsaufnahme 14 angeordnet. Das gemeinsame Durchgangsloch oder die beiden separaten Durchgangslöcher können von den Klemmhebeln 20 und 21 durchgriffen werden.

Die Funktionsweise der erfindungsgemäßen Vorrichtung 1 wird nachfolgend anhand der Fig. 4 bis 7 erläutert.

In Fig. 4 befinden sich alle Klemmhebel 18, 19, 20 und 21 in ihrer Freigabestellung, in welcher sie das jeweilige Trägerelement 7, 8, 9 und 10 nicht in den Führungsaufnahmen 12, 13 und 14 festklemmen. In dem in Fig. 4 gezeigten Zustand können die Trägerelemente 7, 8, 9, 10 samt der zugehörigen Arbeitswerkzeuge 3, 4, 5 und 6 senkrecht zu der in Fig. 1 eingezeichneten Längsebene LE verschoben werden.

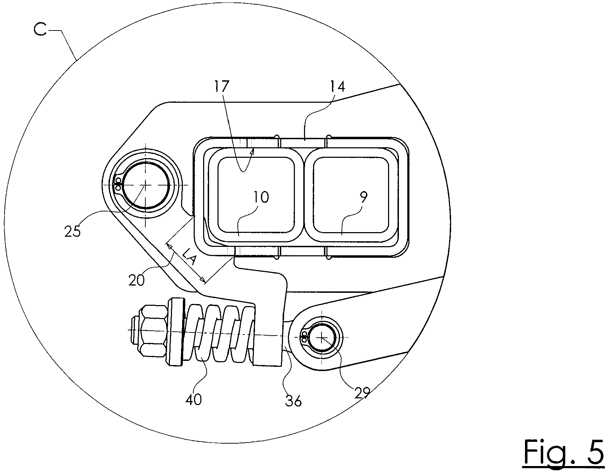

Fig. 5 zeigt das Detail C aus Fig. 4 in vergrößerter Darstellung. Am Beispiel des Klemmhebels 20 ist in Fig. 5 gut zu erkennen, wie er sich in seiner Freigabestellung befindet. Ein Längenabschnitt LA des Klemmhebels 20 durchgreift zwar ein in Fig. 5 im linken unteren Bereich der Führungsaufnahme 14 befindliches Durchgangsloch, greift jedoch nicht an die linke untere Ecke des Querschnitts des Trägerelements 10 an. In Fig. 5 ist ein schmaler Luftspalt zwischen dem Längenabschnitt LA des Klemmhebels 20 und dem Trägerelement 10 zu erkennen. Entsprechende Verhältnisse sind in analoger Weise bei den Klemmhebeln 18 und 19 sowie den Trägerelementen 7 und 8 gegeben, wenn sich die Klemmhebel 18 und 19 in ihrer Freigabestellung befinden.

Nachdem die gewünschten Sollabstände der Arbeitswerkzeuge 3, 4, 5 und 6 von der Längsebene LE des Vorrichtungskörpers 2 durch Verschieben der Trägerelemente 7, 8, 9 und 10 eingestellt worden sind, können die Trägerelemente 7, 8, 9, 10 in den Führungsaufnahmen 12, 13 und 14 arretiert werden. Hierzu wird das als Nockenelement ausgebildete Betätigungsorgan 11 in Fig. 4 gemäß Pfeil P um knapp 180° im Uhrzeigersinn um die Nockenachse 44 gedreht. Dies kann beispielsweise mit Hilfe eines herkömmlichen Schraubenschlüssels 51 geschehen, wie er in den Fig. 2 und 3 gezeigt ist.

Das Drehen des Betätigungsorgans 11 gemäß Pfeil P in Fig. 4 bewirkt, dass die exzentrisch verlaufende Nockensteuerfläche 43 an die Angriffsfläche 47 angreift, gegen diese drückt und an dieser entlang gleitet. Dies hat eine Drehbewegung des Stellhebels 45 im Gegenuhrzeigersinn um die Stellhebelachse 46 zur Folge. Der in Fig. 4 untere Arm des Stellhebels 45 zieht dann das Ausgleichsglied 48 sowie die Verbindungsstange 26 in Fig. 4 nach rechts. Dies wiederum hat zur Folge, dass die Klemmhebel 18, 19, 20 und 21 um ihre jeweiligen Drehachsen 23, 24 und 25 im Gegenuhrzeigersinn schwenken.

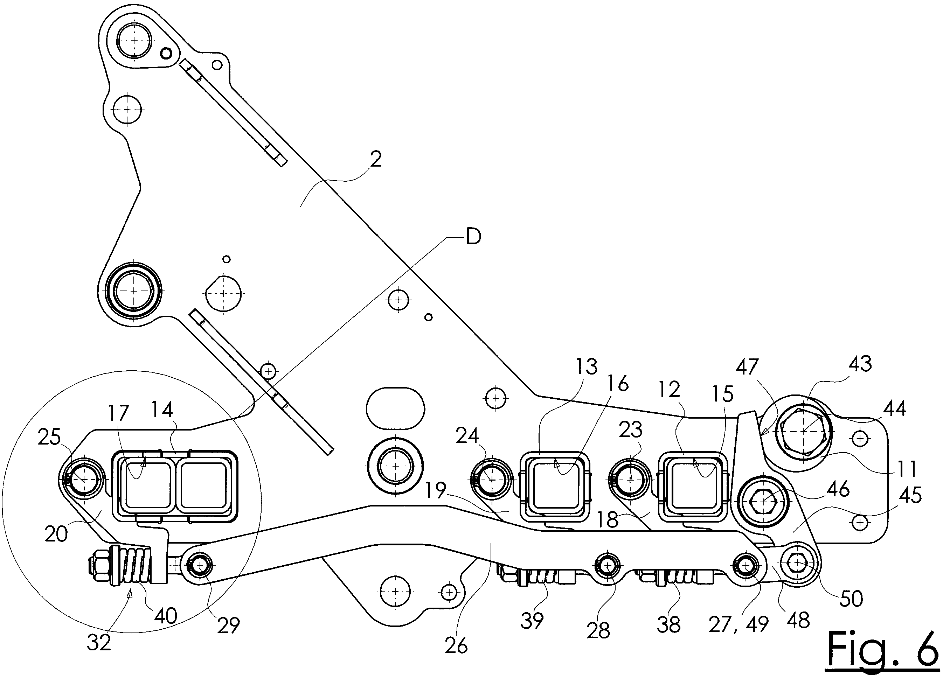

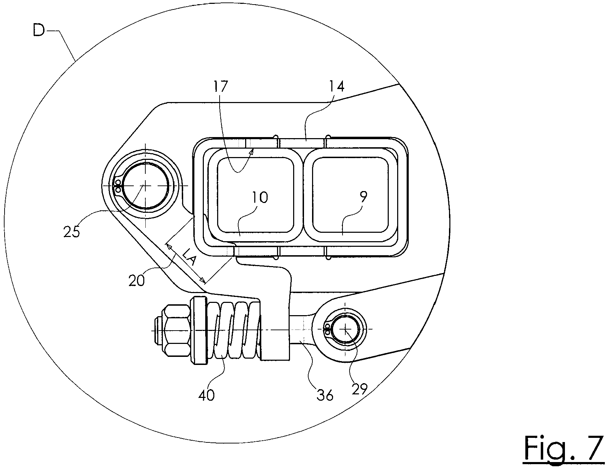

Auf diese Weise wird der in Fig. 6 dargestellte Zustand der Arretiereinrichtung erreicht, in welchem sich alle Klemmhebel 18, 19, 20 und 21 in ihrer jeweiligen Klemmstellung befinden. Fig. 7 zeigt das in Fig. 6 dargestellte Detail D in vergrößerter Darstellung. Am Beispiel des Klemmhebels 20 ist in Fig. 4 zu sehen, wie der Längenabschnitt LA des Klemmhebels 20 das im linken unteren Bereich der Führungsaufnahme 14 befindliche Durchgangsloch durchgreift und gegen die linke untere Ecke des Vierkantquerschnitts des Trägerelements 10 drückt. Die von den beiden Klemmhebeln 20 und 21 auf das Trägerelement 10 aufgebrachte Klemmkraft wird auf das rechts neben dem Trägerelement 10 befindliche Trägerelement 9 übertragen. Die Klemmkraft drückt das Trägerelement 10 unmittelbar und das Trägerelement 9 mittelbar gegen Führungsflächen 17, die von Innenwandungen der Führungsaufnahme 14 gebildet werden. Auf diese Weise werden die Trägerelemente 10 und 9 reib- bzw. kraftschlüssig in der Führungsaufnahme 14 festgelegt bzw. arretiert. Eine Bewegung der Trägerelemente 10 und 9 in einer senkrecht auf der Längsebene LE des Vorrichtungskörpers 2 stehenden Richtung ist jetzt nicht mehr möglich.

Die beispielhaft in Fig. 7 für den Klemmhebel 20 und das Trägerelement 10 gezeigten Verhältnisse sind in der in Fig. 6 dargestellten Klemmstellung der Arretiereinrichtung in analoger Weise auch bei den Klemmhebeln 18 und 19 gegeben. Der Klemmhebel 18 drückt in seiner Klemmstellung das Trägerelement 7 an Führungsflächen 15, die von Innenwandungen der Führungsaufnahme 12 gebildet werden. Der Klemmhebel 19 drückt das Trägerelement 8 gegen Führungsflächen 16, die von Innenwandungen der Führungsaufnahme 13 gebildet werden.

Wird das als Nockenelement ausgebildete Betätigungsorgan 11 aus seiner in Fig. 6 gezeigten Arretiestellung wieder in seine Freigabestellung gemäß Fig. 4 gedreht, so bewegen sich die Klemmhebel 18, 19, 20 und 21 schwerkraftbedingt in ihre jeweilige Freigabstellung zurück.

Wie in den Fig. 5 und 7 zu erkennen ist, ist die Kontur des Längenabschnitts LA des Klemmhebels 20 an die Kontur desjenigen Bereichs der Querschnittsform des Trägerelements 20 angepasst, mit welchem der Längenabschnitt LA in der Klemmstellung des Klemmhebels 20 zusammenwirkt. Entsprechendes gilt in analoger Weise für die Längenabschnitte der Klemmhebel 18 und 19, die in ihrer jeweiligen Klemmstellung mit dem Trägerelement 7 und 8 zusammenwirken.

Bei dem gezeigten Ausführungsbeispiel ist in besonders vorteilhafter Weise ein einziges Betätigungsorgan 11 vorgesehen, mit dessen Hilfe die mehreren Trägerelemente 7, 8, 9 und 10 sowohl gemeinsam arretiert als auch gemeinsam aus dem arretierten Zustand gelöst werden können. Anstelle der genau vier verschiebbaren Trägerelemente 7, 8, 9 und 10 können im Rahmen der vorliegenden Erfindung auch mehr oder weniger als vier verstellbare Trägerelemente an dem Vorrichtungskörper 2 gelagert werden. Erfindungsgemäß wesentlich ist lediglich, dass mehrere verstellbare Trägerelemente vorhanden sind, d.h. wenigstens zwei Trägerelemente.

### BEZUGSZEICHENLISTE

- 1: Vorrichtung
- 2: Vorrichtungskörper
- 3: Arbeitswerkzeug
- 4: Arbeitswerkzeug
- 5: Arbeitswerkzeug
- 6: Arbeitswerkzeug
- 7: Trägerelement für Arbeitswerkzeug 3
- 8: Trägerelement für Arbeitswerkzeug 4
- 9: Trägerelement für Arbeitswerkzeug 6
- 10: Trägerelement für Arbeitswerkzeug 5
- 11: Betätigungsorgan
- 12: Führungsaufnahme für Trägerelement 7
- 13: Führungsaufnahme für Trägerelement 8
- 14: Führungsaufnahme für Trägerelemente 9 und 10
- 15: Führungsfläche der Führungsaufnahme 12
- 16: Führungsfläche der Führungsaufnahme 13
- 17: Führungsfläche der Führungsaufnahme 14
- 18: Klemmhebel für Trägerelement 7
- 19: Klemmhebel für Trägerelement 8
- 20: Klemmhebel für Trägerelemente 9 und 10
- 21: Klemmhebel für Trägerelemente 9 und 10
- 22: Durchgangsloch in Führungsaufnahme 13
- 23: Drehachse des Klemmhebels 18
- 24: Drehachse des Klemmhebels 19
- 25: Drehachse der Klemmhebel 20 und 21
- 26: Verbindungsstange
- 27: Gelenk Klemmhebel 18/Verbindungsstange 26
- 28: Gelenk Klemmhebel 19/Verbindungsstange 26
- 29: Gelenk Klemmhebel 20+21/Verbindungsstange 26
- 30: Dämpfungseinrichtung Klemmhebel 18/Verbindungsstange 26
- 31: Dämpfungseinrichtung Klemmhebel 19/Verbindungsstange 26
- 32: Dämpfungseinrichtung Klemmhebel 20/Verbindungsstange 26
- 33: Dämpfungseinrichtung Klemmhebel 21/Verbindungsstange 26
- 34: Abstützstange der Dämpfungseinrichtung 30
- 35: Abstützstange der Dämpfungseinrichtung 31
- 36: Abstützstange der Dämpfungseinrichtung 32
- 37: Abstützstange der Dämpfungseinrichtung 33
- 38: Druckfeder der Dämpfungseinrichtung 30
- 39: Druckfeder der Dämpfungseinrichtung 31
- 40: Druckfeder der Dämpfungseinrichtung 32
- 41: Druckfeder der Dämpfungseinrichtung 33
- 42 43: Nockensteuerfläche
- 44: Nockenachse
- 45: Stellhebel
- 46: Stellhebelachse
- 47: Angriffsfläche für Nockensteuerfläche 43
- 48: Ausgleichsglied
- 49: erstes Ausgleichsgelenk
- 50: zweites Ausgleichsgelenk
- 51: Schraubenschlüssel

- BB: Bearbeitungsbreite zwischen benachbarten Nutzpflanzenreihen NR
- BD: Boden
- FR: Fahrtrichtung des Zugfahrzeugs
- LA: Längenabschnitt des Klemmhebels 20
- LE: Längsebene des Vorrichtungskörpers 2
- NR: Nutzpflanzenreihe
- P: Drehrichtung des Betätigungsorgans 11

## Patentansprüche

1. Vorrichtung (1) zum Bearbeiten eines landwirtschaftlichen Bodens durch Bewegen der Vorrichtung (1) entlang des Bodens in einer Fahrtrichtung eines Zugfahrzeuges zum Ziehen der Vorrichtung (1), wobei die Vorrichtung (1) einen Vorrichtungskörper (2) mit einer Längsebene (LE), die im Wesentlichen parallel zu der Fahrtrichtung verläuft, mehrere Arbeitswerkzeuge (3, 4, 5, 6) und mehrere, längliche Trägerelemente (7, 8, 9, 10), welche die Arbeitswerkzeuge (3, 4, 5, 6) tragen und an dem Vorrichtungskörper (2) gelagert sind, aufweist, und wobei die Trägerelemente (7, 8, 9, 10) jeweils quer zu der Längsebene (LE) bewegbar sind, so dass das jeweilige Arbeitswerkzeug (3, 4, 5, 6) in verschiedenen Abständen von der Längsebene (LE) angeordnet werden kann,
**dadurch gekennzeichnet, dass**
die Vorrichtung (1) eine Arretiereinrichtung zum Arretieren der Trägerelemente (7, 8, 9, 10) an dem Vorrichtungskörper (2) aufweist, wobei die Arretiereinrichtung ein Betätigungsorgan (11) umfasst, durch dessen Betätigung die Arretierung der mehreren Trägerelemente (7, 8, 9, 10) an dem Vorrichtungskörper (2) gemeinsam lösbar ist oder die mehreren Trägerelemente (7, 8, 9, 10) gemeinsam an dem Vorrichtungskörper (2) festlegbar sind.

2. Vorrichtung (1) nach Anspruch 1,
**dadurch gekennzeichnet, dass**
mittels des Betätigungsorgans (11) sowohl die Arretierung der mehreren Trägerelemente (7, 8, 9, 10) an dem Vorrichtungskörper (2) gemeinsam lösbar ist als auch die mehreren Trägerelemente (7, 8, 9, 10) gemeinsam an dem Vorrichtungskörper (2) festlegbar sind.

3. Vorrichtung nach Anspruch 1 oder 2,
**dadurch gekennzeichnet, dass**
der Vorrichtungskörper (2) mehrere Führungsaufnahmen (12, 13, 14) mit jeweiligen Führungsflächen (15, 16, 17) aufweist, wobei in den Führungsaufnahmen (12, 13, 14) jeweils wenigstens eines der Trägerelemente (7, 8, 9, 10) entlang der jeweiligen Führungsfläche (15, 16, 17) verschiebbar geführt ist, wobei die Arretiereinrichtung mehrere Klemmhebel (18, 19, 20, 21) umfasst und jeder der mehreren Führungsaufnahmen (12, 13, 14) wenigstens einer der mehreren Klemmhebel (18, 19, 20, 21) zugeordnet ist, und wobei der jeweilige Klemmhebel (18, 19, 20, 21) durch Betätigen des Betätigungsorgans (11) von einer Klemmstellung, in welcher er das jeweilige Trägerelement (7, 8, 9, 10) gegen die jeweilige Führungsfläche (15, 16, 17) der jeweiligen Führungsaufnahme (12, 13, 14) drückt und es dadurch reibschlüssig in der jeweiligen Führungsaufnahme (12, 13, 14) unverschiebbar festlegt, in eine Freigabestellung, in welcher er das jeweilige Trägerelement (7, 8, 9, 10) freigibt, so dass es in der jeweiligen Führungsaufnahme (12, 13, 14) entlang der jeweiligen Führungsfläche (15, 16, 17) verschiebbar ist, und/oder umgekehrt bewegbar ist.

4. Vorrichtung nach Anspruch 3,
**dadurch gekennzeichnet, dass**
die Führungsaufnahmen (12, 13, 14) jeweils von einer Führungshülse gebildet werden, die wenigstens ein Durchgangsloch (22) aufweist, durch welches der jeweilige Klemmhebel (18, 19, 20, 21) zum Festlegen des jeweiligen Trägerelements (7, 8, 9, 10) hindurch greifen kann.

5. Vorrichtung nach Anspruch 3 oder 4,
**dadurch gekennzeichnet, dass**
die mehreren Klemmhebel (18, 19, 20, 21) um eine jeweilige Drehachse (23, 24, 25) drehbar an dem Vorrichtungskörper (2) gelagert sind.

6. Vorrichtung nach Anspruch 5,
**dadurch gekennzeichnet, dass**
die Arretiereinrichtung wenigstens eine Verbindungsstange (26) umfasst, wobei jeder der mehreren Klemmhebel (18, 19, 20, 21) über ein jeweiliges Gelenk (27, 28, 29) derart mit der Verbindungsstange (26) gelenkig verbunden ist, dass ein Längenabschnitt (LA) des jeweiligen Klemmhebels (18, 19, 20, 21), der zwischen der jeweiligen Drehachse (23, 24, 25) und dem jeweiligen Gelenk (27, 28, 29) liegt, in der Klemmstellung zum Festlegen des jeweiligen Trägerelements (7, 8, 9, 10) dient.

7. Vorrichtung nach Anspruch 6,
**dadurch gekennzeichnet, dass**
die Arretiereinrichtung mehrere Dämpfungseinrichtungen (30, 31, 32, 33) umfasst, die jeweils zwischen der Verbindungsstange (26) und dem jeweiligen Klemmhebel (18, 19, 20, 21) wirkend angeordnet sind.

8. Vorrichtung nach Anspruch 7,
**dadurch gekennzeichnet, dass**
die jeweilige Dämpfungseinrichtung (30, 31, 32, 33) eine Abstützstange (34, 35, 36, 37), die an dem jeweiligen Gelenk (27, 28, 29) gelenkig mit der Verbindungsstange (26) verbunden ist und den jeweiligen Klemmhebel (18, 19, 20, 21) derart durchsetzt, dass sie sich relativ zu ihm bewegen kann, und eine Druckfeder (38, 39, 40, 41) aufweist, wobei sich die Druckfeder (38, 39, 40, 41) einerseits an der Abstützstange (34, 35, 36, 37) und andererseits an dem jeweiligen Klemmhebel (18, 19, 20, 21) abstützt.

9. Vorrichtung nach einem der vorangehenden Ansprüche,
**dadurch gekennzeichnet, dass**
das Betätigungsorgan (11) ein Nockenelement mit einer Nockensteuerfläche (43) ist, das um eine Nockenachse (44) drehbar an dem Vorrichtungskörper (2) gelagert ist.

10. Vorrichtung nach Anspruch 9,
**dadurch gekennzeichnet, dass**
die Arretiereinrichtung einen Stellhebel (45) umfasst, der um eine Stellhebelachse (46) drehbar an dem Vorrichtungskörper (2) gelagert ist, wobei der Stellhebel (45) auf einer Seite der Stellhebelachse (46) eine Angriffsfläche (47) aufweist, an welcher die Nockensteuerfläche (43) angreift.

11. Vorrichtung nach Anspruch 10 in Verbindung mit Anspruch 6,
**dadurch gekennzeichnet, dass**
die Arretiereinrichtung wenigstens ein Ausgleichsglied (48) umfasst, welches einerseits über ein erstes Ausgleichsgelenk (49) gelenkig mit der Verbindungsstange (26) und andererseits über ein zweites Ausgleichsgelenk (50) auf einer der Angriffsfläche (47) abgewandten Seite der Stellhebelachse (46) gelenkig mit dem Stellhebel (45) verbunden ist.

12. Vorrichtung nach Anspruch 10 in Verbindung mit Anspruch 6,
**dadurch gekennzeichnet, dass**
das erste Ausgleichsgelenk (49) mit dem Gelenk (27) zusammenfällt, welches die Verbindungsstange (26) mit demjenigen Klemmhebel (18) gelenkig verbindet, der am nächsten an dem Stellhebel (45) angeordnet ist.

## Geänderte Patentansprüche

### Geänderte Patentansprüche gemäss Regel 137(2) EPÜ.

1. Vorrichtung (1) zum Bearbeiten eines landwirtschaftlichen Bodens durch Bewegen der Vorrichtung (1) entlang des Bodens in einer Fahrtrichtung eines Zugfahrzeuges zum Ziehen der Vorrichtung (1), wobei die Vorrichtung (1) einen Vorrichtungskörper (2) mit einer Längsebene (LE), die im Wesentlichen parallel zu der Fahrtrichtung verläuft, mehrere Arbeitswerkzeuge (3, 4, 5, 6) und mehrere, längliche Trägerelemente (7, 8, 9, 10), welche die Arbeitswerkzeuge (3, 4, 5, 6) tragen und an dem Vorrichtungskörper (2) gelagert sind, aufweist, wobei die Trägerelemente (7, 8, 9, 10) jeweils quer zu der Längsebene (LE) bewegbar sind, so dass das jeweilige Arbeitswerkzeug (3, 4, 5, 6) in verschiedenen Abständen von der Längsebene (LE) angeordnet werden kann, und wobei
die Vorrichtung (1) eine Arretiereinrichtung zum Arretieren der Trägerelemente (7, 8, 9, 10) an dem Vorrichtungskörper (2) aufweist, wobei die Arretiereinrichtung ein Betätigungsorgan (11) umfasst, durch dessen Betätigung die Arretierung der mehreren Trägerelemente (7, 8, 9, 10) an dem Vorrichtungskörper (2) gemeinsam lösbar ist oder die mehreren Trägerelemente (7, 8, 9, 10) gemeinsam an dem Vorrichtungskörper (2) festlegbar sind,
**dadurch gekennzeichnet, dass**
der Vorrichtungskörper (2) mehrere Führungsaufnahmen (12, 13, 14) mit jeweiligen Führungsflächen (15, 16, 17) aufweist, wobei in den Führungsaufnahmen (12, 13, 14) jeweils wenigstens eines der Trägerelemente (7, 8, 9, 10) entlang der jeweiligen Führungsfläche (15, 16, 17) verschiebbar geführt ist, wobei die Arretiereinrichtung mehrere Klemmhebel (18, 19, 20, 21) umfasst und jeder der mehreren Führungsaufnahmen (12, 13, 14) wenigstens einer der mehreren Klemmhebel (18, 19, 20, 21) zugeordnet ist, und wobei der jeweilige Klemmhebel (18, 19, 20, 21) durch Betätigen des Betätigungsorgans (11) von einer Klemmstellung, in welcher er das jeweilige Trägerelement (7, 8, 9, 10) gegen die jeweilige Führungsfläche (15, 16, 17) der jeweiligen Führungsaufnahme (12, 13, 14) drückt und es dadurch reibschlüssig in der jeweiligen Führungsaufnahme (12, 13, 14) unverschiebbar festlegt, in eine Freigabestellung, in welcher er das jeweilige Trägerelement (7, 8, 9, 10) freigibt, so dass es in der jeweiligen Führungsaufnahme (12, 13, 14) entlang der jeweiligen Führungsfläche (15, 16, 17) verschiebbar ist, und/oder umgekehrt bewegbar ist.

2. Vorrichtung (1) nach Anspruch 1,
**dadurch gekennzeichnet, dass** mittels des Betätigungsorgans (11) sowohl die Arretierung der mehreren Trägerelemente (7, 8, 9, 10) an dem Vorrichtungskörper (2) gemeinsam lösbar ist als auch die mehreren Trägerelemente (7, 8, 9, 10) gemeinsam an dem Vorrichtungskörper (2) festlegbar sind.

3. Vorrichtung nach Anspruch 1 oder 2,
**dadurch gekennzeichnet, dass** die Führungsaufnahmen (12, 13, 14) jeweils von einer Führungshülse gebildet werden, die wenigstens ein Durchgangsloch (22) aufweist, durch welches der jeweilige Klemmhebel (18, 19, 20, 21) zum Festlegen des jeweiligen Trägerelements (7, 8, 9, 10) hindurch greifen kann.

4. Vorrichtung nach einem der vorangehenden Ansprüche,
**dadurch gekennzeichnet, dass** die mehreren Klemmhebel (18, 19, 20, 21) um eine jeweilige Drehachse (23, 24, 25) drehbar an dem Vorrichtungskörper (2) gelagert sind.

5. Vorrichtung nach Anspruch 4,
**dadurch gekennzeichnet, dass** die Arretiereinrichtung wenigstens eine Verbindungsstange (26) umfasst, wobei jeder der mehreren Klemmhebel (18, 19, 20, 21) über ein jeweiliges Gelenk (27, 28, 29) derart mit der Verbindungsstange (26) gelenkig verbunden ist, dass ein Längenabschnitt (LA) des jeweiligen Klemmhebels (18, 19, 20, 21), der zwischen der jeweiligen Drehachse (23, 24, 25) und dem jeweiligen Gelenk (27, 28, 29) liegt, in der Klemmstellung zum Festlegen des jeweiligen Trägerelements (7, 8, 9, 10) dient.

6. Vorrichtung nach Anspruch 5,
**dadurch gekennzeichnet, dass** die Arretiereinrichtung mehrere Dämpfungseinrichtungen (30, 31, 32, 33) umfasst, die jeweils zwischen der Verbindungsstange (26) und dem jeweiligen Klemmhebel (18, 19, 20, 21) wirkend angeordnet sind.

7. Vorrichtung nach Anspruch 6,
**dadurch gekennzeichnet, dass** die jeweilige Dämpfungseinrichtung (30, 31, 32, 33) eine Abstützstange (34, 35, 36, 37), die an dem jeweiligen Gelenk (27, 28, 29) gelenkig mit der Verbindungsstange (26) verbunden ist und den jeweiligen Klemmhebel (18, 19, 20, 21) derart durchsetzt, dass sie sich relativ zu ihm bewegen kann, und eine Druckfeder (38, 39, 40, 41) aufweist, wobei sich die Druckfeder (38, 39, 40, 41) einerseits an der Abstützstange (34, 35, 36, 37) und andererseits an dem jeweiligen Klemmhebel (18, 19, 20, 21) abstützt.

8. Vorrichtung nach einem der vorangehenden Ansprüche,
**dadurch gekennzeichnet, dass** das Betätigungsorgan (11) ein Nockenelement mit einer Nockensteuerfläche (43) ist, das um eine Nockenachse (44) drehbar an dem Vorrichtungskörper (2) gelagert ist.

9. Vorrichtung nach Anspruch 8,
**dadurch gekennzeichnet, dass** die Arretiereinrichtung einen Stellhebel (45) umfasst, der um eine Stellhebelachse (46) drehbar an dem Vorrichtungskörper (2) gelagert ist, wobei der Stellhebel (45) auf einer Seite der Stellhebelachse (46) eine Angriffsfläche (47) aufweist, an welcher die Nockensteuerfläche (43) angreift.

10. Vorrichtung nach Anspruch 9 in Verbindung mit Anspruch 5,
**dadurch gekennzeichnet, dass** die Arretiereinrichtung wenigstens ein Ausgleichsglied (48) umfasst, welches einerseits über ein erstes Ausgleichsgelenk (49) gelenkig mit der Verbindungsstange (26) und andererseits über ein zweites Ausgleichsgelenk (50) auf einer der Angriffsfläche (47) abgewandten Seite der Stellhebelachse (46) gelenkig mit dem Stellhebel (45) verbunden ist.

11. Vorrichtung nach Anspruch 10,
**dadurch gekennzeichnet, dass** das erste Ausgleichsgelenk (49) mit dem Gelenk (27) zusammenfällt, welches die Verbindungsstange (26) mit demjenigen Klemmhebel (18) gelenkig verbindet, der am nächsten an dem Stellhebel (45) angeordnet ist.
